**Europäisches Patentamt**

**European Patent Office**

**Office européen des brevets**

(19)

(11) Numéro de publication: **0 025 971**
**B1**

(12) ## FASCICULE DE BREVET EUROPEEN

(45) Date de publication du fascicule du brevet: **04.05.83**

(51) Int. Cl.³: **B 29 D 23/12, F 16 L 9/16**

(21) Numéro de dépôt: **80105563.3**

(22) Date de dépôt: **17.09.80**

(54) Machine de fabrication en continu de tubes en matière plastique par enroulement hélicoidal.

(30) Priorité: **25.09.79 FR 7923794**

(43) Date de publication de la demande:
**01.04.81 Bulletin 81/13**

(45) Mention de la délivrance du brevet:
**04.05.83 Bulletin 83/18**

(84) Etats contractants désignés:
**BE CH DE GB IT LI LU NL SE**

(56) Documents cités:
**Néant**

(73) Titulaire: **PONT-A-MOUSSON S.A.**
**91, Avenue de la Libération**
**F-54017 Nancy (FR)**

(72) Inventeur: **Baston, Artur**
**VOBAU ARTUR BASTON KG**
**D-6653 Blieskastel-Beitfurt (DE)**

(74) Mandataire: **Weil, Roger et al,**
**c/o Centre de Recherches de Pont-à-Mousson BP**
**28**
**F-54700 Pont-à-Mousson (FR)**

Courier Press, Leamington Spa, England.

## Machine de fabrication en continu de tubes en matière plastique par enroulement hélicoïdal

La présente invention est relative à la fabrication de corps tubulaires en matière thermoplastique par enroulement en hélice d'un profilé constitué d'un corps à section rectangulaire muni sur chaque bord d'un relief d'agrafage, l'un mâle et l'autre femelle. Ces tubes, rigides et légers, peuvent avoir un diamètre nettement supérieur aux diamètres maximaux que l'on peut extruder directement sous forme de tubes.

Dans une demande de brevet européen déposée le 08.08.80 et publiée sous le n° 0 025 121, la Demanderesse a décrit un tube de ce type dans lequel chaque relief comporte un voile axial de support qui prolonge l'une des surfaces extérieure et intérieure du corps du profilé, les deux voiles adjacents étant en butée et les deux reliefs en prise définissant avec les bords adjacents du corps du profilé un espace à section en U occupé par un cordon de section complémentaire.

Grâce à cet agencement, on obtient un tube dont la paroi est lisse extérieurement aussi bien qu'intérieurement.

On connaît des machines de fabrication en continu de tubes en matière plastique obtenus par enroulement en hélice d'un profilé constitué d'un corps à section rectangulaire muni sur chaque bord d'un relief d'agrafage, l'un mâle et l'autre femelle ménageant une gorge. Ces machines comprennent généralement une cage cylindrique fixe munie d'une fenêtre d'entrée du profilé combinée à un galet de guidage de ce profilé et, à partir de cette fenêtre, d'un relief intérieur hélicoïdal de guidage de la gorge du profilé, un mandrin coaxial monté rotatif dans cette cage, et un dispositif d'extraction disposé à la sortie de la cage. Cette cage joue le rôle d'un écrou fixe par rapport au profilé jouant le rôle d'une vis rotative au cours du formage du tube. Ceci est connu par le brevet FR 1 212 735.

Des machines de ce type ne permettent pas de fabriquer un tube lisse extérieurement puisque le profilé plastique à enrouler doit comporter obligatoirement une gorge de forme conjuguée de celle du relief hélicoïdal de la cage. Des machines de ce type ne permettent pas non plus l'enroulement hélicoïdal d'un cordon de remplissage de la gorge du profilé car le cordon ne trouverait pas place entre la cage et le profilé. Or, pour fabriquer le tube suivant la demande de brevet antérieure précitée, il faut assurer un bon accostage des spires à agrafer et une application bien guidée du cordon de verrouillage des agrafes en remplissant la gorge de manière à rendre le tube lisse extérieurement.

L'invention a pour but de fournir une machine du même type capable de résoudre ce problème difficile, c'est-à-dire de fabriquer en continu un tube tel que décrit dans la demande de brevet précitée.

A cet effet, l'invention a pour objet une machine du type précité, caractérisée en ce que le relief de la cage a une section en U à peu près identique à celle du cordon et en ce qu'en aval de ce relief la cage dépourvue de tout relief interne comporte une seconde fenêtre d'entrée du cordon combinée à un galet de guidage de ce cordon.

D'autres caractéristiques et avantages de l'invention ressortiront de la description qui va suivre, donnée à titre d'exemple non limitatif et en regard des dessins annexés, sur lesquels:

la Fig. 1 est une vue partielle en coupe axiale d'un tube réalisé au moyen d'une machine suivant l'invention, en cours de fabrication;

la Fig. 2 est une vue analogue du tube terminé;

la Fig. 3 est une vue analogue d'une variante du tube de la Fig. 2;

la Fig. 4 est une vue schématique en perspective d'une machine suivant l'invention destinée à la fabrication du tube de la Fig. 2;

les Fig. 5, 8 et 9 sont des vues partielles prises respectivement suivant les lignes 5—5, 8—8 et 9—9 de la Fig. 4;

les Fig. 6 et 7 sont respectivement des vues des galets de guidage du profilé et du cordon;

la Fig. 10 illustre en bout la mise en place du cordon;

la Fig. 11 est une vue en coupe axiale du dispositif d'extraction et de guidage du tube.

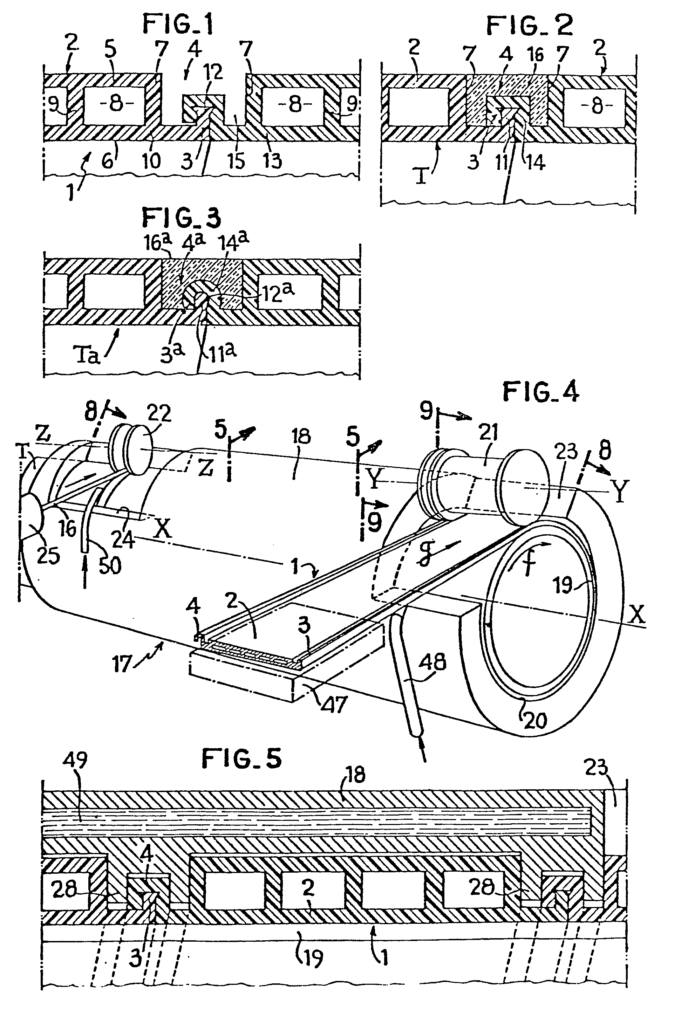

La Fig. 1 illustre l'enroulement en hélice d'un profilé 1 extrudé en matière plastique thermoplastique, par exemple en chlorure de polyvinyle rigide ou PVC. Le profilé 1 est constitué d'un corps 2 bordé de chaque côté d'un relief d'agrafage 3, 4.

Le corps 2 a une section rectangulaire à grands côtés axiaux extérieure 5 et intérieur 6 et à petits côtés radiaux 7, axiaux et radiaux s'étendant par rapport au tube final. Ce corps 2 est alvéolé ou en caisson, c'est-à-dire qu'il comporte plusieurs cavités longitudinales 8 séparées par des cloisons 9 à section radiale. Le corps 2 peut par exemple comporter quatre cavités 8 à section rectangulaire, les cloisons 9 et les côtés du corps ayant une épaisseur commune.

Le relief 3 est un relief mâle. Il comporte une section en L constituée d'une branche ou voile axial 10 et d'une branche radiale 11. La première branche prolonge le grand côté intérieur 6 du corps 2, avec la même épaisseur, tandis que la seconde s'étend radialement vers l'extérieur sur environ la moitié de la hauteur d'un petit côté 7 pour se terminer en une queue d'aronde 12.

Le relief 4 est un relief femelle et est constitué, en section, d'une partie ou voile 13 de liaison avec le corps 2 qui est analogue à la branche 10, situé dans le prolongement de cette branche et en butée sur elle dans la position agrafée représentée. De l'extrémité de cette partie 13 part vers l'extérieur un crochet en U 14 qui tourne radialement vers l'intérieur sa cavité en queue d'aronde et qui est adapté pour envelopper exactement la branche 11 du relief 3 jusqu'à venir pratiquement au contact de la branche 10.

Dans la position agrafée, la hauteur de l'ensemble des deux reliefs est nettement inférieure à celle du corps 2, et sa largeur est nettement inférieure à la distance axiale séparant les petits côtés 7 en regard. Ainsi est défini entre ces derniers et autour du crochet 14 un espace libre 15 en U.

Pour terminer le tube T (Fig. 2), on dispose dans l'espace 15 un cordon 16 en matière plastique thermoplastique rigide, telle que le PVC, de section en U complémentaire. Ce cordon vient donc coiffer l'ensemble des deux reliefs 3, 4, et sa surface extérieure affleure celle des deux parties adjacentes du corps 2 du profilé.

Le tube T résultant est donc lisse aussi bien extérieurement qu'intérieurement, donc peu sensible à des accrochages ou à des déchirures lors de manutentions; en outre, la surface extérieure du tube peut rester constamment propre du fait qu'elle est lisse, notamment lorsque ce tube est posé sur un sol de terre et/ou de gravier, et le tube se prête à des assemblages au moyens des raccords et garnitures d'étanchéité classiques. L'avantage esthétique n'est pas non plus négligeable.

De plus, les spires ne risquent pas de se séparer les unes des autres grâce d'une part à l'agrafage positif 12—14 et d'autre part au verrouillage de cet agrafage assuré par le cordon 16.

L'enroulement du profilé 1 ainsi que la mise en place du cordon 16 s'effectuent de préférence à une température suffisante pour assurer, en plus de leur solidarisation mécanique, une solidarisation étanche par thermosoudage des éléments 3, 4 et 16. En variante, on peut utiliser une colle dans le même but.

Le tube $T^a$ de la Fig. 3 ne diffère de celui de la Fig. 2 que par la forme des reliefs $3^a$ et $4^a$: la branche radiale $11^a$ du relief mâle $3^a$ se termine par un bourrelet $12^a$ en trois-quarts de cercle, et le crochet $14^a$ du relief femelle $4^a$ est arrondi de façon conjuguée. La concavité du cordon $16^a$ est arrondie de façon correspondante.

Les Fig. 4 à 11 représentent une machine 17 capable de réaliser en continu le tube T de la Fig. 2, avec thermosoudage des reliefs 3, 4 et du cordon 16. Les modifications de cette machine qui sont nécessaires pour obtenir le tube $T^a$ de la Fig. 3 seront évidentes pour l'homme de l'art.

La machine 17 comprend essentiellement une cage ou manchon cylindrique fixe 18 d'axe X—X horizontal, un mandrin coaxial 19 entraîné en rotation à vitesse constante dans le sens f à l'intérieur de cette cage, par un moteur non représenté, en ménageant avec elle un espace annulaire 20, et deux galets fous 21 et 22 de guidage.

A son extrémité amont, la cage 18 présente une échancrure ou fenêtre 23 pour l'entrée du profilé 1 dans laquelle est situé le galet 21. Près de son extrémité aval, mais à une certaine distance de celle-ci, la cage comporte une seconde échancrure ou fenêtre 24, plus petite que la première, pour l'entrée du cordon 16, dans laquelle est situé le galet 22.

Le profilé 1 est amené tangentiellement sur le mandrin 19, dans la fenêtre 23 et sous le galet 21, suivant un certain angle, égal à l'angle d'hélice de l'enroulement, par rapport à l'axe X—X. Il est débité à vitesse constante par une extrudeuse non représentée ou à partir d'une bobine d'alimentation. De même, le cordon 16 sort, à vitesse constante, d'une extrudeuse 25 ou d'une bobine d'alimentation pour atteindre tangentiellement, dans la fenêtre 24 et sous le galet 22, le profilé déjà enroulé.

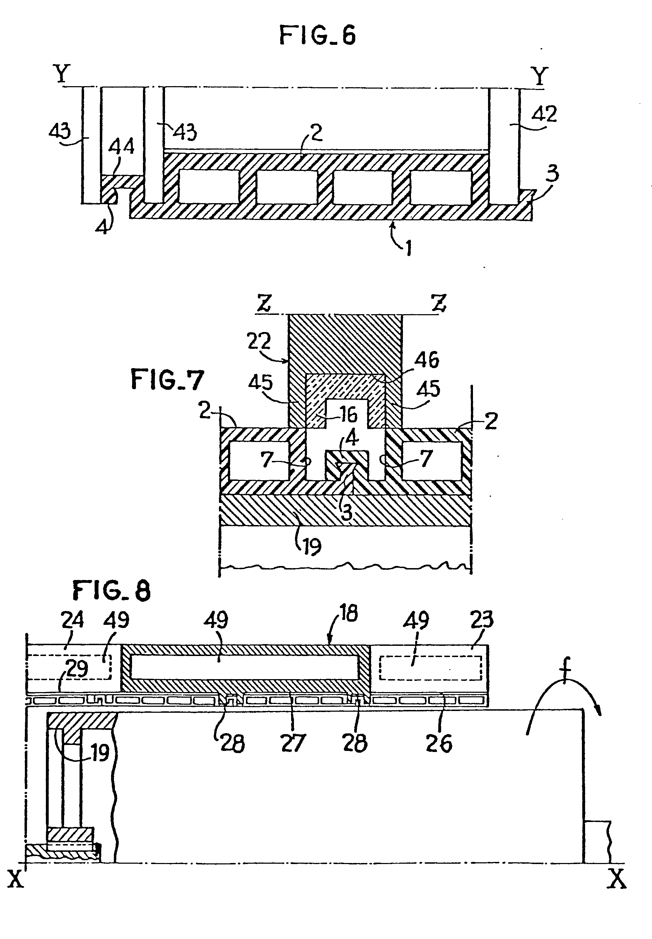

La cage 18 (Fig. 8) présente intérieurement sur toute sa longueur une surface cylindrique lisse partiellement garnie d'un relief hélicoïdal. Celle-ci se compose d'amont en aval de trois zones successives: une zone 26 dépourvue de tout relief; une zone 27 commençant près de l'extrémité aval de la fenêtre 23 et se terminant à l'extrémité amont de la fenêtre 24 et dans laquelle fait saillie vers l'axe X—X une nervure hélicoïdale de guidage 28 ayant une section en U correspondant à celle du cordon 16 et s'étendant sur environ deux tours; et une zone 29 de nouveau dépourvue de tout relief, la partie de la cage 18 située en aval de la seconde fenêtre 24 s'étendant sur environ un tour.

Le mandrin 19 a, sur toute sa longueur, une surface extérieure cylindrique, striée longitudinalement pour améliorer l'entraînement du profilé 1. Toutefois, au droit de la zone 29, cette surface converge légèrement vers l'aval pour faciliter la sortie du tube T réalisé.

Le mandrin 19 est prolongé au-delà de l'extrémité aval de la cage par un dispositif 30 d'extraction et de guidage du tube T (Fig. 11).

A cet effet, l'extrémité aval du mandrin 19 est solidarisée en rotation et en translation axiale avec l'élément menant d'un joint de cardan 31. Les deux éléments menant et mené du joint 31 sont susceptibles de tourner autour de l'axe X—X avec une légère déviation angulaire en vue de donner de la souplesse au guidage du tube T à la sortie de la cage 18. L'élément mené du joint de cardan 31 est solidaire d'un arbre 32 sur lequel est fixé un manchon ou anneau cylindrique 33 de support et de guidage interne du tube T. Le manchon 33 tourne avec l'arbre 32 grâce à une solidarisation constituée par exemple par une broche qui traverse de part en part l'arbre 32 et un moyeu 34 du manchon 33.

L'arbre 32 est muni également d'un expanseur 35 à galets 36 d'axes orthogonaux à l'axe de l'arbre 32, par exemple au nombre de deux diamétralement opposés, portés par des leviers 37 articulés en leur milieu et destinés à écarter les galets 36 (position en trait plein) ou à les rapprocher (position en trait interrompu) de l'axe X—X, et par conséquent à presser plus ou moins ces galets sur la paroi interne du tube T. Le réglage de l'écartement de ces galets 36 s'effectue au moyen d'un écrou 38 sur lequel sont articulées les extrémités aval des leviers 37. L'écrou 38 est vissé sur une vis 39 manoeuvrée par un volant 40 et prolongeant l'arbre 32, sur l'extrémité duquel sont articulées les extrémités amont des leviers 37. Des galets obliques 41 des support extérieure sont enfin prévus au droit du manchon 33. L'angle des galets 41 par rapport à l'axe X—X correspond à l'angle d'hélice de l'enroulement.

Le galet 21 de guidage du profilé 1 (Fig. 6) d'axe Y—Y perpendiculaire à l'arrivée oblique du profilé 1, a un profil à peu près conjugué du profil extérieur de celui-ci. Il possède ainsi une partie cylindrique correspondant au corps alvéolé 2 et ménageant un léger jeu radial avec celui-ci, une joue d'extrémité amont 42 s'introduisant sans jeu dans l'espace menagé entre le relief mâle 3 et le corps 3 et, à l'autre extrémité, une paire de joues identiques 43 séparées par une gorge circulaire 44 recevant sans jeu l'agrafe femelle 14 du profilé 1. Le bord aval libre du relief 4 affleure alors de bord de la joue 43 aval.

Le galet 22 de guidage du cordon 16 (Fig. 7) d'axe Z—Z oblique par rapport à l'axe X—X et perpendiculaire à l'arrivée oblique de ce cordon, comporte une paire de joues identiques 45 délimitant entre elles une gorge circulaire 46 dans laquelle s'insère sans jeu le cordon 16, les branches de celui-ci affleurant alors le bord des joues 45.

La machine 17 comporte en outre des moyens de régulation de la température:

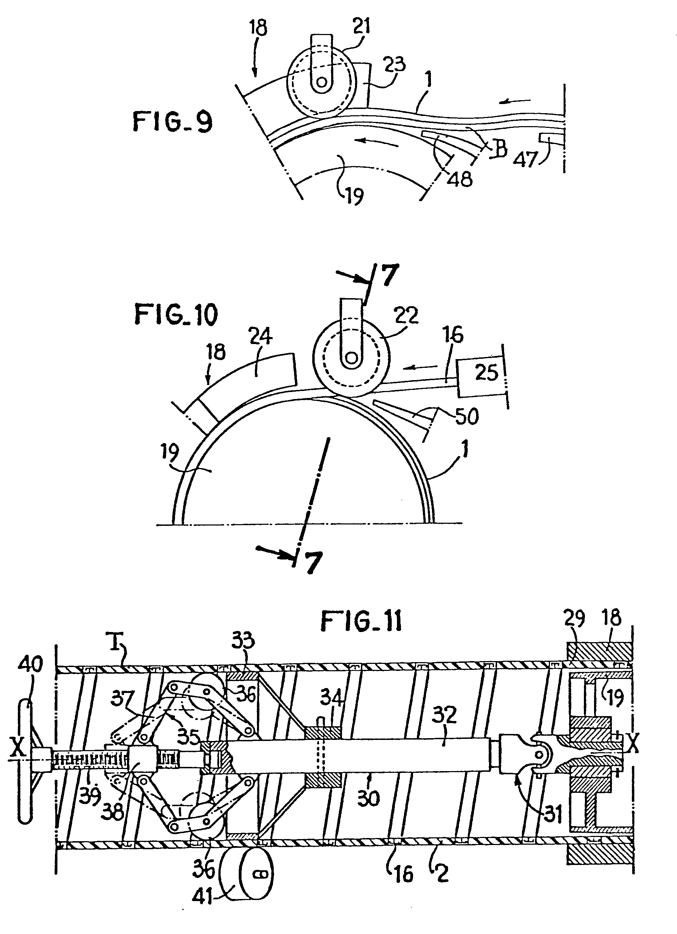

— un organe de chauffage 47, par exemple à résistance électrique, est placé sous le profilé 1, un peu avant sont entrée dans la cage 18, afin de rendre ce profilé plus malléable et plus déformable. Grâce à cet organe 47, le profilé 1 forme une boucle d'affaissement (Fig. 9) dont on mesure la flèche afin de régler la température de chauffage de l'organe 47: si la flèche s'accentue, il faut baisser la température de l'organe 47; si la flèche diminue, il faut en augmenter la température;

— un autre organe de chauffage, par exemple un ajutage d'air chaud 48 (Fig. 9) placé entre le mandrin 19 et le profilé 1, sous le galet 21 et près de ses joues 43, ramollit les reliefs 3 et 4 pour permettre leur soudage;

— le mandrin 19 est pourvu intérieurement d'une circulation de fluide (non représentée);

— il en est de même de la cage 18, dont la paroi est creuse (chambre 49 des Fig. 5 et 8). Cette circulation fournit une température appropriée pour que, dans la cage, le durcissement de la matière plastique ne s'opère pas mais commence seulement;

— un autre organe de chauffage, par exemple un ajutage d'air chaud 50 (Fig. 1 et 10), placé entre le mandrin 19 et le cordon 16, sous le galet 22, amène les surfaces en regard des reliefs 3 et 4 et du cordon 16 à une température suffisante pour permettre leur soudage.

Fonctionnement

Soit à fabriquer un tube T par enroulement en hélice du profilé 1 puis du cordon 16.

Le mandrin 19 est entraîné en rotation à une vitesse qui est harmonisée avec la vitesse de sortie de l'extrudeuse, non représentée, produisant le profilé 1 suivant la flèche *g* (Fig. 4). Les moyens, indiqués plus haut, de mesure de la flèche de la boucle B que forme le profilé 1 entre sa sortie d'extrudeuse et la cage 18 (Fig. 9) sont également utilisés pour régler les vitesses relatives: quand la flèche augmente (excédent des vitesses d'extrusion par rapport à la vitesse d'enroulement), la vitesse d'extrusion est diminuée (ou la vitesse de rotation du mandrin 19 est augmentée); inversement, quand la flèche diminue (excédent de vitesse d'enroulement par rapport à la vitesse d'extrusion), la vitesse d'extrusion est augmentée (ou la vitesse de rotation du mandrin 19 est diminuée). Cette régulation s'effectue automatiquement par des moyens connus, non représentés.

Au démarrage de l'installation, on introduit manuellement le profilé 1 sous le galet 21 et dans la cage 18. Puis ce profilé continue de lui-même son mouvement, entraîné par la rotation du mandrin 19 sur lequel il est appliqué par le galet 21. L'entrée du profilé 1 dans la cage (Fig. 9) s'effectue tangentiellement à cette cage et au mandrin, par la fenêtre 23, et obliquement par rapport à l'axe X—X, avec une inclinaison qui est celle de l'hélice d'enroulement. Comme représenté, le relief mâle 3 est de préférence situé à l'amont, de sorte que le relief femelle 4 pénètre le premier dans la zone fermée 27 de la cage 18. Juste avant d'entrer dans la cage 18, le profilé 1 est guidé par le galet 21, qui roule librement sur lui comme sur un rail, sa joue 42 positionnant l'agrafe mâle 3 et ses joues 43 ainsi que sa gorge 44 positionnant son agrafe femelle 4. Le galet 21 applique sur le mandrin les zones de contact du profilé par ses joues 42 et 43 et sa gorge 44, de façon à faciliter l'entraînement du profilé par le mandrin tout en guidant le profilé.

Grâce à ce guidage précis par le galet 21, le profilé 1 vient exactement en prise avec la nervure hélicoïdale 28 et son corps 2 vient s'emboîter dans l'espace séparant les spires de cette nervure. Ainsi, le profilé et la cage se mettent en prise comme une vis (profilé) dans un écrou (cage 18). Comme la cage est fixe, le profilé 1 progresse en rotation et en translation suivant un mouvement hélicoïdal.

Lorsque la première spire du profilé est enroulée, la portion de celui-ci entrant dans la cage 18 commence à former une seconde spire qui, grâce au guidage du galet 21, accoste la première spire, emboîte son agrafe femelle 4 sur l'agrafe mâle 3 de la première spire déjà formée, au droit du galet 21, grâce à l'action de ce galet et de la nervure de guidage 28. Cet agrafage 3—4, soumis à un soufflage d'air chaud par l'ajutage 48, se soude au fur et à mesure de l'enroulement dans la cage 18, qui va consolider cet agrafage et donner aux spires enroulées une forme parfaitement cylindrique. Le galet 21, par la pression et le guidage qu'il exerce au moyen de ses joues 43 et de sa gorge 44 sur les parties agrafées, chauffées, facilite cette soudure.

Dans la zone 27 de la cage 18 vont ainsi s'enrouler, avec un léger jeu radial extérieur mais sans jeu axial (Fig. 5), par exemple deux spires agrafées, qui passent ensuite dans la zone aval 29 de la cage, où s'effectue la finition de l'assemblage par mise en place du cordon 16.

Progressant ainsi dans la cage 18, la première spire formée atteint l'échancrure 24 et entre dans la zone 29 de la cage 18, à paroi lisse dépourvue de nervure hélicoïdale.

L'amorce du cordon 16 est introduite manuellement dans la gorge 46 du galet 22 et dans l'espace 15 entourant la première spire de l'agrafage 3—4, cette introduction s'effectuant tangentiellement par rapport au mandrin 19 et obliquement par rapport à l'axe X—X, avec une inclinaison qui est celle de l'hélice d'enroulement. Le cordon 16, entraîné par le mandrin, se loge au fond de la gorge 46 et vient, à l'extrémité de la fenêtre 24, s'introduire dans la rainure hélicoïdale 15 en coiffant l'agrafage 3—4. Pendant cet enroulement, les joues 45 du galet 22 roulent sur les bords en regard des spires adjacentes du corps 2. Ainsi, grâce à la cage 18 et au guidage assuré par le galet 22, le cordon 16 vient occuper complètement cette rainure 15 en affleurant la paroi extérieure 5 des spires adjacentes. C'est la cage 18 qui verrouille le cordon 16 sur l'agrafage 3—4 et c'est l'absence de relief hélicoïdal interne dans la zone 29 de la cage qui permet l'introduction du cordon 16 dans la cage.

Bien entendu, le débit de l'extrudeuse 25 est réglé automatiquement en fonction de la vitesse de rotation du mandrin 19.

Comme l'ajutage d'air chaud 49 ramollit la surface intérieure du cordon 16 et la surface extérieure de l'agrafage 3—4, une soudure se fait à l'intérieur de la cage 18, dans la zone 29, contre la paroi intérieure lisse de celle-ci, qui parfait l'emboîtement du cordon 16 sur l'agrafage 3—4 et lui donne une forme extérieure cylindrique. Le cordon 16 s'enroule dans la zone 29 de la cage 18 sur preque un tour complet, puis le tube final T, formé et agrafé, sort de la cage 18.

En vue d'éviter toute déformation du tube T fraîchement enroulé, agrafé et soudé, ce tube est encore supporté et entraîné en rotation positivement par le dispositif d'extraction 30, sa translation s'effectuant grâce au mouvement vis-écrou constitué par la rainure hélicoïdale 15 séparant les spires enroulées du profilé 1 et la nervure hélicoïdale 28 de la cage.

A cet effet, le tube T est supporté, à une certaine distance au-delà de la cage 18, par le manchon 33 et les galets 41. Le manchon 33, solidaire en rotation du mandrin 19 grâce au joint de cardan 31, n'oppose aucune résistance de frottement à la rotation du tube T. Le tube T est lui-même positivement entraîné en rotation par l'expanseur 35, dont les galets 36 sont convenablement appliqués sur la paroi intérieure du tube T par réglage approprié de l'écrou 38 au moyen du volant 40. La disposition oblique des galets 36 permet également le mouvement hélicoïdal du tube T.

Enfin, le tube T peut être tronçonné en aval.

Grâce à l'introduction tardive du cordon 16, il est possible de mettre en place en continu ce cordon tout en bénéficiant du mouvement vis-écrou assuré par la coopération de la nervure 28 et des spires du profilé 1 pour faire progresser en translation le tube T, et donc de bénéficier d'un excellent guidage et d'une excellente régularité de formage et d'assemblage des spires du tube T. Dès la fin de ce guidage, c'est-à-dire au début de la zone 29 de la cage, la nervure 28 est remplacée par le cordon 16.

Grâce à l'entraînement positif en rotation du tube T à sa sortie de la cage d'enroulement, au moyen de l'expanseur rotatif 35, du support rotatif 33 et de l'accouplement en rotation 31 avec le mandrin rotatif 19, le tube T ne subit aucune contrainte de torsion.

**Revendications**

1. Machine de fabrication en continu de tubes (T) en matière plastique obtenus par enroulement en hélice d'un profilé (1) constitué d'un corps à section rectangulaire muni sur chaque bord d'un relief d'agrafage (3, 4), l'un (3) mâle et l'autre (4) femelle, dans lesquels chaque relief (3, 4) comporte un voile axial (10) de support qui prolonge l'une des surfaces extérieure (5) et intérieure (6) du corps (2) du profilé (1), les deux voiles (10) adjacents étant en butée et les deux reliefs (3, 4) en prise définissant avec les bords adjacents du corps (2) du profilé (1) un espace (15) à section en U occupé par un cordon (16) de section complémentaire, machine du type comprenant une cage cylindrique fixe (18) munie d'une fenêtre (23) d'entrée du profilé (1) combinée à un galet (21) de guidage de ce profilé (1) et, à partir de cette fenêtre (23), d'un relief intérieur (28) hélicoïdal de guidage du profilé (1), un mandrin coaxial (19) monté rotatif dans cette cage (18), et un dispositif d'extraction (30) disposé à la sortie de la cage (18), caractérisée en ce que le relief (28) de la cage (18) a une section en U correspondant à celle du cordon (16) et en ce qu'en aval de ce relief la cage (18) dépourvue de tout relief interne comporte une seconde fenêtre (24) d'entrée du cordon (16) combinée à un galet (22) de guidage de ce cordon.

2. Machine suivant la revendication 1, caractérisée en ce que la seconde fenêtre (24) se termine dans une zone (29) de la cage (18) présentant une paroi intérieure lisse, près de l'extrémité aval de la zone 29.

3. Machine suivant la revendication 2, caractérisée en ce que le relief (28) s'étend sur environ deux tours et la partie de la cage (18) située en aval de la seconde fenêtre (24) sur environ un tour.

4. Machine suivant l'une quelconque des revendications 1 à 3, caractérisé en ce que le galet (22) de guidage du cordon comporte une gorge périphérique (46) conjuguée du profil extérieur de ce cordon.

5. Machine suivant la revendication 4, caractérisée en ce que le galet (22) de guidage du cordon (16) est adapté pour rouler sur les bords en regard (7) des deux spires adjacentes du corps (2) du profilé (1) et pour chevaucher l'espace (15) séparant ces deux spires.

6. Machine suivant l'une quelconque des revendications 1 à 5, caractérisée en ce qu'un ajutage (48) de soufflage d'air chaud est dirigé dans la seconde fenêtre (24), sous le galet (22) de guidage du cordon.

7. Machine suivant l'une quelconque des revendications 1 à 6, caractérisée en ce que le mandrin (19) est prolongé vers l'aval, à l'extérieur de la cage (18), par un dispositif (30) d'extraction du tube (T, Tª) qui est solidaire en rotation de ce mandrin.

8. Machine suivant la revendication 7, caractérisée en ce que le dispositif d'extraction (30) comporte un anneau (33) de support interne du tube (T, Tª).

9. Machine suivant la revendication 8, caractérisée en ce que le dispositif d'extraction (30) comporte en outre des galets obliques (41) de roulement sur la surface extérieure du tube (T, Tª) au droit de l'anneau de support (33).

10. Machine suivant l'une quelconque des revendications 7 à 9, caractérisée en ce que le dispositif de serrage (30) est relié au mandrin (19) par l'intermédiaire d'un joint de cardan (31).

**Patentansprüche**

1. Maschine zur kontinuierlichen Herstellung von Rohren (T) aus Kunststoff durch schraubenförmiges Wickeln eines Profils (1) aus einem Körper mit rechteckigem Querschnitt, der an jedem Rand mit einem Falzansatz (3, 4) versehen ist, und zwar einem eindringen (3) und einem aufnehmenden (4), wobei jeder Ansatz (3, 4) einen axialen Tragschenkel (10) aufweist, der eine der Außen- und Innenflächen (5; 6) des Körpers (2) des Profils (1) verlängert, wobei die benachbarten Schenkel (10) aneinander liegen und die beiden in Eingriff stehenden Ansätze (3, 4) mit benachbarten Rändern des Körpers (2) des Profils (1) einen Raum mit U-förmigem Querschnitt bilden, der von einer Schnur (16) mit komplementärem Querschnitt eingenommen wird, wobei die Maschine aufweist: einen feststehenden zylindrischen Käfig (18) mit einem Fenster (23) für den Eintritt des Profils (1), welches Fenster (23) mit einer Rolle (21) zur Führung dieses Profils (1) versehen ist, und ausgehend von diesem Fenster (23), einen inneren schraubenförmigen Ansatz zur Führung des Profils (1), einen in diesem Käfig (18) drehbar gelagerten koaxialen Dorn (19) und eine am Austritt des Käfigs (18) angeordnete Abziehvorrichtung (30), dadurch gekennzeichnet, daß der Ansatz (28) des Käfigs (18) einen U-förmigen Querschnitt aufweist, der demjenigen der Schnur (16) entspricht, und daß in Bewegungsrichtung abwärts des Ansatzes des Käfigs (18) der von jedem inneren Ansatz freie Käfig (18) für den Eintritt der Schnur (16) ein zweites Fenster (24) aufweist, das mit einer Rolle (22) zur Führung dieser Schnur versehen ist.

2. Maschine nach Anspruch 1, dadurch gekennzeichnet, daß das zweite Fenster (24) in einer Zone (29) des Käfigs (18) endet, die in der Nähe des in Bewegungsrichtung abwärts von der Zone (29) gelegenen Endes eine glatte Innenwand aufweist.

3. Maschine nach Anspruch 2, dadurch gekennzeichnet, daß sich der Ansatz (28) auf etwa zwei Umgängen erstreckt und daß sich der in Bewegungsrichtung abwärts vom zweiten Fenster (24) gelegene Teil auf etwa einem Umgang erstreckt.

4. Maschine nach einem der Ansprüche 1 bis 3, dadurch gekennzeichnet, daß die Rolle (22) zur Führung der Schnur eine Umfangsnut (46) aufweist, die dem Außenprofil dieser Schnur angepaßt ist.

5. Maschine nach Anspruch 4, dadurch gekennzeichnet, daß sich die Rolle (22) zur Führung der Schnur (16) eignet zum Rollen auf den gegenüberliegenden Rändern zweier benachbarter Windungen des Körpers (2) des Profils (1) und zum Überdecken des die beiden Windungen trennenden Raums (15).

6. Maschine nach einem der Ansprüche 1 bis 5, dadurch gekennzeichnet, daß unterhalb der Rolle (22) zur Führung der Schnur ein Blasanschluß (48) für Heißluft in das zweite Fenster (24) gerichtet ist.

7. Maschine nach einem der Ansprüche 1 bis 6, dadurch gekennzeichnet, daß der Dorn (19) in Bewegungsrichtung abwärts und außerhalb des Käfigs (18) durch eine mit dem Dorn drehfest verbundene Vorrichtung (30) zum Abziehen des Rohrs (T, Tª) verlängert ist.

8. Maschine nach Anspruch 7, dadurch gekennzeichnet, daß die Abziehvorrichtung (30) einen innerhalb des Rohrs (T, Tª) gelegenen Tragring (33) aufweist.

9. Maschine nach Anspruch 8, dadurch gekennzeichnet, daß die Abziehvorrichtung außerdem Schrägrollen (41) aufweist, die an der Stelle des Tragrings (33) auf der Außenfläche des Rohrs (T, Tᵃ) rollen.

10. Maschine nach einem der Ansprüche 7 bis 9, dadurch gekennzeichnet, daß die Klemmvorrichtung (30) mittels eines Kardangelenks (31) mit dem Dorn (19) verbunden ist.

## Claims

1. Machine for the continuous manufacture of tubes (T) from plastics material obtained by the helical winding of a sectional member (1) constituted by a body of rectangular section provided on each edge with a relief member (3, 4) which clip together, one member (3) being male and the other (4) being female, in which each relief member (3, 4) comprises an axial support leg (10) which extends one of the outer surfaces (5) and inner surfaces (6) of the body (2) of the sectional member (1), the two adjacent legs (10) being in abutment and the two relief members (3, 4) in engagement defining with the adjacent edges of the body (2) of the sectional member (1), a space (15) of U-shaped cross section, filled by a bead (16) of complementary section, which machine is of the type comprising a fixed cylindrical cage (18) provided with an opening (23) for the admission of the sectional member (1) combined with a roller (21) for guiding this sectional member (1) and, from this opening (23), an internal helical relief (28) for guiding the sectional member (1), a coaxial mandrel (19) mounted to rotate in this cage (18) and an extraction device (30) located at the outlet of the cage (18), characterised in that the relief (28) of the cage (18) has a U-shaped cross section corresponding to that of the bead (16) and in that downstream of this relief, the cage (18) which is devoid of any internal relief comprises a second opening (24) for the admission of the bead (16) combined with a roller (22) for guiding this bead.

2. Machine according to claim 1, characterised in that the second opening (24) terminates in a region (29) of the cage (18) comprising a smooth inner wall, close to the downstream end of the region (29).

3. Machine according to claim 2, characterised in that the relief (28) extends over approximately two turns and the part of the cage (18) located downstream of the second opening (24) over approximately one turn.

4. Machine according to one of claims 1 to 3, characterised in that the roller (22) for guiding the bead comprises a peripheral groove (46) interacting with the outer profile of this bead.

5. Machine according to claim 4, characterised in that the roller (22) for guiding the bead (16) is adapted to roll on facing edges (7) of two adjacent turns of the body (2) of the sectional member (1) and to overlap the space (15) separating these two turns.

6. Machine according to one of claims 1 to 5, characterised in that a nozzle (48) for blowing hot air is directed into the second opening (24), below the roller (22) for guiding the bead.

7. Machine according to one of claims 1 to 6, characterised in that the mandrel (19) is extended downstream, outside the cage (18), by a device (30) extracting the tube (T, Tᵃ) which is connected to rotate with this mandrel.

8. Machine according to claim 7, characterised in that the extraction device (30) comprises a ring (33) for the internal support of the tube (T, Tᵃ).

9. Machine according to claim 8, characterised in that the extraction device (30) also comprises oblique rollers (41) for travelling on the outer surface of the tube (T, Tᵃ) level with the support ring (33).

10. Machine according to one of claims 7 to 9, characterised in that the clamping device (30) is connected to the mandrel (19) through the intermediary of a universal joint (31).

0 025 971

**FIG_1**

**FIG_2**

**FIG_3**

**FIG_4**

**FIG_5**

FIG_6

FIG_7

FIG_8

FIG_9

FIG_10

FIG_11